# FASCICULE DE BREVET EUROPEEN

(11) **EP 0 899 000 B1**
(45) Date de publication et mention de la délivrance du brevet: **03.11.2004**
(21) Numéro de dépôt: 98202867.2
(22) Date de dépôt: 21.08.1998
(51) Int. Cl.: B01D 53/70, C01D 3/04, C04B 18/10

(54) **Procédé pour épurer des fumées provenant de l'incinération de déchets et fabriquer une solution aqueuse de sel**
Verfahren zur Reinigung von Müllverbrennungsabgasen und zur Herstellung einer wässrigen Salzlösung
Process for purifying exhaust gases from waste incineration and producing an aqueous solution of salt

(30) Priorité: 27.08.1997 BE 9700707
(43) Date de publication de la demande: 03.03.1999
(73) Titulaire: SOLVAY (Société Anonyme), 1050 Bruxelles (BE)
(72) Inventeur: Depelsenaire, Guy, 1490 Court-Saint-Etienne (BE)
(74) Mandataire: Jacques, Philippe

(56) Documents cités:
- EP-B- 0 603 218
- WO-A-95/19835

## Description

Les déchets d'origine ménagère, urbaine ou hospitalière contiennent habituellement des quantités importantes de résidus organiques, notamment chlorés, et de métaux lourds (notamment du zinc, du plomb, du cadmium, du mercure et du chrome). Ils contiennent aussi fréquemment des chlorures métalliques (particulièrement du chlorure de sodium) et de l'aluminium. Une technique régulièrement utilisée pour réduire le volume de ces déchets consiste à les incinérer. L'incinération de tels déchets conduit à la formation de fumées toxiques, contenant du chlorure d'hydrogène, des métaux lourds volatiles et des cendres. Celles-ci contiennent invariablement des chlorures métalliques, des résidus organiques (notamment des dioxines et des furanes), des métaux lourds et des imbrûlés dans lesquels on trouve fréquemment de l'aluminium métallique. Avant d'être rejetées dans l'atmosphère, ces fumées doivent dès lors être dépoussiérées et épurées.

Dans le brevet européen EP-0 603 218 [SOLVAY (Société Anonyme)], on décrit un procédé qui est conçu pour épurer une telle fumée et pour simultanément produire une solution aqueuse de chlorure de sodium utilisable dans un procédé industriel. Selon ce procédé connu, on soumet la fumée, après dépoussiérage, à une épuration en chlorure d'hydrogène et en métaux lourds volatiles. A cet effet, on la traite avec du bicarbonate de sodium pour décomposer le chlorure d'hydrogène et former du chlorure de sodium et on la soumet ensuite à une filtration où on recueille un résidu solide comprenant le chlorure de sodium et les métaux lourds. Pour obtenir la solution aqueuse industrielle de chlorure de sodium, on disperse le résidu solide dans de l'eau, on alcalinise le milieu aqueux ainsi obtenu pour précipiter les métaux lourds à l'état d'hydroxydes métalliques, on sépare le précipité formé et on traite la solution aqueuse de chlorure de sodium résultante sur une résine chélatante.

Dans ce procédé connu, les cendres séparées de la fumée à l'étape de dépoussiérage (qui précède son épuration en chlorure d'hydrogène) contiennent généralement des composés chlorés hydrosolubles (notamment du chlorure de sodium), des métaux lourds (notamment du zinc, du plomb, du cadmium, du mercure et du chrome), des dérivés organiques et des imbrûlés (dans lesquels on peut trouver de l'aluminium métallique). La présence de substances hydrosolubles, de métaux lourds et de matières organiques toxiques (dioxines, furanes) peut poser des difficultés pour la mise en décharge de ces cendres volantes et implique de les soumettre au préalable à un procédé d'inertage destiné à les rendre inoffensives pour le milieu. Un procédé d'inertage efficace est décrit dans la demande internationale WO-97/31874A [SOLVAY (Société Anonyme)].

L'invention vise à fournir un procédé pour la production d'une solution aqueuse de chlorure de sodium au départ de fumées du type de celles définies plus haut, qui permet de rentabiliser le chlorure de sodium présent dans les cendres et facilite par ailleurs leur inertage.

En conséquence, l'invention concerne un procédé pour, d'une part, épurer une fumée chargée de cendres, provenant de l'incinération de déchets qui contiennent des métaux lourds, du chlorure de sodium et des résidus organiques chlorés et, d'autre part, fabriquer une solution aqueuse de chlorure de sodium, selon lequel
. dans une première étape, on soumet la fumée à un dépoussiérage, duquel on recueille séparément une fumée dépoussiérée, d'une part, et des cendres, d'autre part;
. dans une deuxième étape, on traite la fumée dépoussiérée avec un réactif basique comprenant un composé sodique et on recueille un gaz chargé de poussières;
. dans une troisième étape, on soumet le gaz à un dépoussiérage, duquel on recueille un gaz dépoussiéré, d'une part, et des poussières, d'autre part;
. dans une quatrième étape, on disperse les poussières dans de l'eau et on recueille un milieu aqueux comprenant une solution aqueuse de chlorure de sodium; et
. dans une cinquième étape, on soumet le milieu aqueux à une épuration connue en soi pour recueillir, d'une part, la solution aqueuse de chlorure de sodium et, d'autre part, un résidu solide comprenant une partie au moins des métaux lourds;
selon l'invention, le procédé se caractérise en ce qu'on soumet les cendres de la première étape à un lavage avec de l'eau et en ce qu'une partie au moins de l'eau recueillie du lavage est utilisée pour disperser les poussières à la quatrième étape.

La fumée soumise au procédé selon l'invention est une fumée qui provient de l'incinération de déchets contenant des métaux lourds, du chlorure de sodium et des résidus organiques chlorés. La fumée contient de ce fait du chlorure d'hydrogène et des métaux lourds volatiles et elle est en outre chargée de cendres. Celles-ci comprennent du chlorure de sodium et des métaux lourds. Il peut arriver qu'elles contiennent en outre d'autres chlorures métalliques hydrosolubles, ainsi que des imbrûlés, ces derniers comprenant généralement de l'aluminium métallique.

On entend désigner par métaux lourds, les métaux dont la masse spécifique est au moins égale à 5 g/cm³, ainsi que le béryllium, l'arsénic, le sélénium et l'antimoine, conformément à la définition généralement admise (Heavy Metals in Wastewater and Sludge Treatment Processes; Vol. I, CRC Press, Inc; 1987; page 2).

Dans le procédé selon l'invention, le dépoussiérage à la première étape peut être opéré par tout moyen approprié, communément utilisé dans les techniques de dépoussiérage des gaz. On peut par exemple utiliser un cyclone, un filtre électrostatique ou un filtre à tissus filtrants.

Le réactif basique utilisé à la deuxième étape comprend un composé sodique. Par définition, le composé sodique est un composé chimique contenant du sodium. Il est généralement un composé inorganique et il est basique de sorte qu'il décompose le chlorure d'hydrogène présent dans la fumée en formant du chlorure de sodium. Le composé sodique constitue généralement plus de 50 % (de préférence au moins 80 %) du poids du réactif basique. Il constitue avantageusement l'essentiel, voire la totalité du réactif basique.

Selon une forme de réalisation avantageuse de l'invention, le composé sodique comprend du (bi)carbonate de sodium. L'expression (bi)carbonate de sodium désigne indifféremment du bicarbonate de sodium du carbonate de sodium anhydre ou hydraté ou un mélange de carbonate de sodium et de bicarbonate de sodium, par exemple du sesquicarbonate de sodium qui est un composé de formule générale Na₂CO₃.NaHCO₃.2H₂O obtenu notamment au départ d'un minerai de trona. Le bicarbonate de sodium est préféré. Dans une variante préférée de cette forme de réalisation de l'invention, le composé sodique est constitué essentiellement de (bi)carbonate de sodium.

En plus du composé sodique, le réactif basique peut comprendre des additifs renforçant l'efficacité de l'épuration de la fumée tels que, par exemple, un composé peroxydé de métal alcalin [comme proposé dans la demande de brevet européen EP-0 779 834 de SOLVAY(Société Anonyme)] ou un hydroxycarbonate de magnésium ou du coke de lignite comme proposé dans la demande de brevet belge BE -1011153A [SOLVAY (Société Anonyme)].

A la deuxième étape du procédé selon l'invention, le traitement de la fumée avec le réactif basique est exécuté de telle sorte que le gaz (chargé de poussières) que l'on recueille à l'issue de ladite deuxième étape soit sensiblement exempt de liquide, en particulier d'eau. A la deuxième étape, le traitement avec le réactif basique peut dès lors être indifféremment un traitement par voie sèche ou un traitement par voie semi-humide. On entend par traitement par voie sèche un traitement dans lequel le réactif basique est introduit à l'état d'une poudre solide dans la fumée, en l'absence d'un liquide, en particulier d'eau. En général, dans le traitement par voie sèche, le réactif basique est mis en oeuvre à l'état d'une poudre que l'on injecte dans un courant de fumée circulant à l'intérieur d'une chambre de réaction. On entend par traitement semi-humide un traitement dans lequel le réactif basique est introduit dans le gaz en présence d'une quantité de liquide (habituellement de l'eau) telle que celui-ci est totalement vaporisé à l'issue de la deuxième étape. Dans le traitement par voie semi-humide, le réactif basique est généralement mis en oeuvre à l'état d'une poudre dispersée dans un liquide, généralement de l'eau. Des informations concernant le traitement de la fumée avec le réactif basique sont accessibles dans le brevet européen EP-603 218 et la demande internationale WO 95/19835, tous les deux au nom de SOLVAY (Société Anonyme).

A la troisième étape, le dépoussiérage du gaz peut être opéré par tout moyen approprié, communément utilisé dans les techniques de dépoussiérage des gaz. On préfère toutefois réaliser le dépoussiérage du gaz sur un filtre à tissus filtrants. Les filtres à manches sont spécialement recommandés. On recueille de la troisième étape un gaz sensiblement épuré, que l'on peut dès lors évacuer tel quel à la cheminée. Les poussières que l'on recueille par ailleurs comprennent du chlorure de sodium (résultant de la réaction du chlorure d'hydrogène avec le composé sodique) et des métaux lourds, à l'état métallique ou combiné. Dans le cas d'une fumée contenant des oxydes de soufre, les poussières contiennent aussi du sulfate de sodium (provenant de la réaction des oxydes de soufre avec le composé sodique). Elles contiennent généralement aussi l'excès de composé sodique mis en oeuvre pour réagir avec le chlorure d'hydrogène et, le cas échéant, les oxydes de soufre.

Les quatrième et cinquième étapes du procédé selon l'invention visent à produire la solution aqueuse de chlorure de sodium. A cet effet, on disperse les poussières dans de l'eau pour dissoudre le chlorure de sodium qu'elles contiennent. Selon l'invention, l'eau utilisée pour disperser les poussières est de l'eau recueillie du lavage des cendres qui ont été séparées à la première étape. La technique mise en oeuvre pour le lavage des cendres n'est pas critique. On peut par exemple soumettre les cendres à une agitation dans de l'eau. On recommande que le pH de l'eau utilisée pour le lavage des cendres soit sélectionné de telle sorte que l'eau recueillie du lavage présente une valeur de pH supérieure à 8, de préférence de 9,5 à 12,5, de manière à éviter une dissolution importante des métaux lourds. L'eau utilisée pour disperser les poussières à la quatrième étape peut être constituée en totalité par l'eau de lavage des cendres. Au besoin, on peut lui ajouter un complément d'eau. En règle générale, la totalité de l'eau mise en oeuvre à la quatrième étape doit être au moins suffisante pour dissoudre la totalité du chlorure de sodium et des autres matières hydrosolubles des poussières. Nonobstant cette condition, la quantité d'eau n'est pas critique. On n'a toutefois pas intérêt à utiliser une quantité d'eau excédentaire, l'objectif étant généralement d'obtenir une solution concentrée de chlorure de sodium, contenant environ 250 g de chlorure de sodium par litre. Le milieu aqueux que l'on obtient à la quatrième étape consiste dès lors en une solution aqueuse de chlorure de sodium contenant des impuretés, parmi lesquelles des métaux lourds. L'épuration mise en oeuvre à la cinquième étape a pour objectif d'éliminer ces impuretés. Selon une forme de réalisation avantageuse de l'invention, ladite épuration comprend une alcalinisation du milieu aqueux à une valeur de pH de 8 à 14, de manière à précipiter les métaux lourds à l'état d'hydroxydes, une filtration et un traitement du filtrat sur une résine chélatante.

L'invention présente l'avantage que la solution aqueuse de chlorure de sodium recueillie à l'issue de la cinquième étape est enrichie du chlorure de sodium présent dans les cendres de la première étape.

Selon une forme d'exécution avantageuse du procédé selon l'invention, les cendres recueillies du lavage sont soumises à un inertage. Dans cette forme d'exécution du procédé selon l'invention, l'inertage des cendres est facilité du fait qu'elles sont sensiblement exemptes de composés hydrosolubles, ceux-ci ayant été éliminés au cours du lavage.

Selon une autre forme de réalisation du procédé selon l'invention, le précipité recueilli à la cinquième étape précitée est également soumis à un inertage. Selon une variante de cette forme de réalisation du procédé, le précipité recueilli à la cinquième étape est réuni aux cendres, après que celles-ci aient été soumises au lavage, et le mélange ainsi obtenu est soumis à l'inertage.

Dans un mode d'exécution particulièrement recommandé des deux formes de réalisation qui viennent d'être décrites, l'inertage est effectué au moyen de la technique décrite dans la demande internationale WO- 97/31874A [SOLVAY (Société Anonyme)]. A cet effet, on additionne aux cendres, au précipité de la cinquième étape ou à leur mélange, un réactif sélectionné parmi l'acide phosphorique et les phosphates des métaux alcalins, on soumet le mélange phosphaté ainsi obtenu à un gâchage avec de l'eau et un liant hydraulique en sorte de former un mortier hydraulique et on soumet le mortier hydraulique à une prise et un durcissement. Le réactif utilisé comprend avantageusement de l'hexamétaphosphate de sodium et le liant hydraulique est de préférence du ciment Portland ou un clinker de ciment Portland. Par ailleurs, dans une variante avantageuse des formes de réalisation de l'invention, qui viennent d'être décrites, la prise et le durcissement du mortier sont effectués sous une atmosphère humide, de préférence saturée de vapeur d'eau. Cette variante de l'invention est spécialement recommandée dans le cas de cendres contenant du chrome de valence 6. On a en effet observé que, toutes autres choses égales par ailleurs, la présence d'une atmosphère humide au cours de la prise et du durcissement du mortier hydraulique a pour effet d'améliorer sensiblement l'inertage du chrome dans la masse solide recueillie à l'issue du durcissement.

L'invention s'applique spécialement aux fumées produites par l'incinération de déchets d'origine ménagère ou hospitalière, ces déchets renfermant habituellement des composés chlorés volatiles, du chlorure de sodium et d'autres chlorures métalliques, et des métaux lourds (VGB Kraftwerkstechnik, 69, Heft 2, 1989, pages 212-220). Selon l'origine des déchets, les métaux lourds comprennent le cadmium, le mercure, l'antimoine, le plomb, le cobalt, le chrome, le cuivre, le manganèse, le vanadium, l'étain, le fer, le nickel, le calcium, le magnésium et le zinc, cette liste n'étant pas exhaustive. Ces déchets renferment par ailleurs fréquemment de l'aluminium, à l'état métallique ou d'alliage.

L'invention concerne plus généralement un procédé pour, d'une part, épurer une fumée chargée de cendres, provenant de l'incinération de déchets qui contiennent des métaux lourds, du chlorure de sodium et des résidus organiques chlorés et, d'autre part, fabriquer une solution aqueuse selon lequel
. dans une première étape, on soumet la fumée à un dépoussiérage, duquel on recueille séparément une fumée dépoussiérée, d'une part, et des cendres, d'autre part;
. dans une deuxième étape, on traite la fumée dépoussiérée avec un réactif basique et on recueille un gaz chargé de poussières;
. dans une troisième étape, on soumet le gaz à un dépoussiérage, duquel on recueille un gaz dépoussiéré, d'une part, et des poussières, d'autre part;
. dans une quatrième étape, on disperse les poussières dans de l'eau et on recueille un milieu aqueux comprenant une solution aqueuse d'un sel dérivé du composé basique; et
. dans une cinquième étape, on soumet le milieu aqueux à une épuration connue en soi pour recueillir, d'une part, la solution aqueuse du sel dérivé du composé basique et, d'autre part, un résidu solide comprenant une partie au moins des métaux lourds;
ledit procédé se caractérisant en ce qu'on soumet les cendres de la première étape à un lavage avec de l'eau et en ce qu'une partie au moins de l'eau recueillie du lavage est utilisée pour disperser les poussières à la quatrième étape.

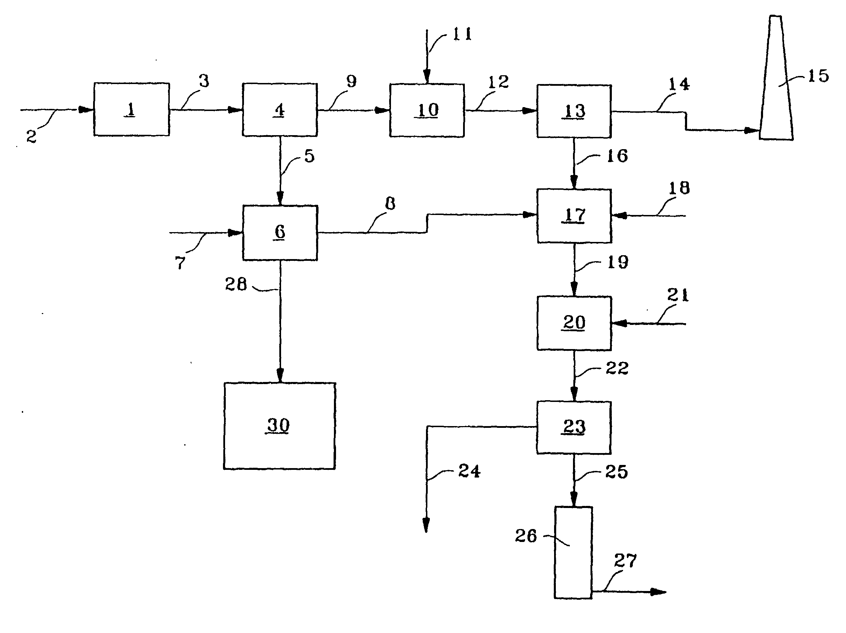

Des particularités et détails de l'invention vont apparaître au cours de la description qui va suivre de la figure unique du dessin annexé, qui représente le schéma d'une installation mettant en oeuvre une forme de réalisation particulière du procédé selon l'invention.

L'installation représentée à la figure comprend un four 1 que l'on alimente avec des déchets ménagers ou hospitaliers 2. Ces déchets comprennent, comme exposé plus haut, des composés organiques chlorés (notamment du polychlorure de vinyle), du chlorure de sodium, des métaux lourds et de l'aluminium.

Les déchets 2 sont incinérés dans le four 1, duquel sort une fumée 3. Celle-ci comprend du chlorure d'hydrogène (provenant de la décomposition des composés organiques chlorés) et des métaux lourds volatiles, ainsi qu'éventuellement du dioxyde de soufre et/ou des oxydes d'azote. Elle est par ailleurs chargée de cendres comprenant du chlorure de sodium, des métaux lourds et de l'aluminium.

A la sortie du four 1, la fumée 3 est traitée dans un dépoussiéreur 4 (par exemple un cyclone ou un filtre électrostatique), pour en séparer les cendres 5.

Les cendres 5 contiennent du chlorure de sodium, des métaux lourds et de l'aluminium. Elle sont transférées dans une chambre de lavage 6, où elles sont lavées avec un courant d'eau 7 pour dissoudre le chlorure de sodium qu'elles contiennent. L'eau de lavage 8, recueillie de la chambre de lavage 6 comprend par conséquent du chlorure de sodium dissous. Le pH de l'eau 7 est adapté de telle sorte que l'eau 8 recueillie de la chambre de lavage 6 présente une valeur de pH sensiblement comprise entre 9,5 et 12,5. De cette manière, on minimise la dissolution des métaux lourds.

Les cendres lavées 28, recueillies de la chambre 6 sont sensiblement exemptes de chlorure de sodium. Elles sont envoyées dans une installation d'inertage, désignée dans son ensemble par la notation de référence 30. Des particularités et détails concernant le traitement des cendres 28 dans l'installation d'inertage 30 sont accessibles dans la demande internationale WO-97/31874A [SOLVAY (Société Anonyme)].

La fumée dépoussiérée 9 recueillie du dépoussiéreur 4 est envoyée dans une chambre de réaction 10 où on lui additionne du bicarbonate de sodium 11 à l'état d'une poudre. Le bicarbonate de sodium 11 est introduit dans la fumée 9 en une quantité au moins suffisante pour décomposer le chlorure d'hydrogène qu'elle contient et former du chlorure de sodium. La fumée 12 recueillie de la chambre 10 est envoyée dans un filtre à manches 13, pour la dépoussiérer. La fumée dépoussiérée 14 recueillie du filtre 13 est évacuée à la cheminée 15.

Les poussières 16 retenues dans le filtre 13 comprennent du chlorure de sodium et des métaux lourds. Elle sont envoyées dans une chambre de dispersion 17, où on les disperse dans l'eau de lavage 8, de manière à dissoudre le chlorure de sodium qu'elles contiennent. En cas de besoin, on ajoute un complément d'eau 18, de manière à dissoudre la totalité du chlorure de sodium des poussières 16. Le milieu aqueux 19 recueilli de la chambre de dissolution 17 comprend une solution aqueuse de chlorure de sodium et des métaux lourds. Il est envoyé dans une chambre de réaction 20 où on l'alcalinise par addition d'hydroxyde de sodium 21 en une quantité suffisante pour amener son pH entre 8 et 14, ce qui a pour effet de précipiter les métaux lourds à l'état d'hydroxydes. La suspension aqueuse 22 recueillie de la chambre de réaction 20 est envoyée sur un filtre 23 où on sépare le précipité 24 de métaux lourds. Le filtrat 25 est envoyé dans une colonne 26 où il circule au contact d'une résine chélatante pour éliminer les dernières traces de métaux lourds. On recueille de la colonne 26 une solution aqueuse de chlorure de sodium 27, de pureté suffisante pour permettre son emploi, telle quelle, dans un procédé industriel, par exemple pour la fabrication de carbonate de sodium par le procédé de la soude à l'ammoniaque ou pour la production de chlore et d'hydroxyde de sodium par électrolyse. Des informations concernant le traitement du milieu aqueux 19 dans la chambre de réaction 20 et dans la colonne 26 sont accessibles dans le brevet européen EP-0-603 218 [SOLVAY (Société Anonyme)].

Le précipité 24 est éventuellement soumis à un procédé d'inertage, du type de celui décrit dans la demande internationale WO- 97/31874A [SOLVAY (Société Anonyme)]. En variante, le précipité 24 est réuni aux cendres 28 provenant de la chambre de lavage 6 et le mélange ainsi obtenu est traité dans l'installation d'inertage 30.

## Revendications

1. Procédé pour, d'une part, épurer une fumée chargée de cendres, provenant de l'incinération de déchets qui contiennent des métaux lourds, du chlorure de sodium et des résidus organiques chlorés et, d'autre part, fabriquer une solution aqueuse, selon lequel
. dans une première étape, on soumet la fumée (3) à un dépoussiérage (4), duquel on recueille séparément une fumée dépoussiérée (9), d'une part, et des cendres (5) d'autre part;
. dans une deuxième étape, on traite la fumée dépoussiérée (9) avec un réactif basique (11) et on recueille un gaz chargé de poussières (12);
. dans une troisième étape, on soumet le gaz (12) à un dépoussiérage (13), duquel on recueille un gaz dépoussiéré (14), d'une part, et des poussières (16), d'autre part;
. dans une quatrième étape, on disperse (17) les poussières (16) dans de l'eau et on recueille un milieu aqueux (19) comprenant une solution aqueuse d'un sel dérivé du composé basique; et
. dans une cinquième étape, on soumet le milieu aqueux (19) à une épuration connue en soi pour recueillir, d'une part, la solution aqueuse (25) du sel dérivé du composé basique et, d'autre part, un résidu solide (24) comprenant une partie au moins des métaux lourds; ,
**caractérisé en ce qu'**on soumet les cendres (5) de la première étape à un lavage (6) avec de l'eau et **en ce qu'**une partie au moins de l'eau recueillie (8) du lavage (6) est utilisée pour disperser les poussières (16) à la quatrième étape

2. Procédé selon la revendication 1, **caractérisé en ce que** le réactif basique comprend un composé sodique et le sel dérivé est du chlorure de sodium

3. Procédé selon la revendication 2, **caractérisé en ce que** le composé sodique comprend du (bi)carbonate de sodium.

4. Procédé selon les revendications 2 à 3, **caractérisé en ce que** le pH de l'eau utilisée pour le lavage des cendres est choisi de telle sorte que l'eau recueillie du lavage présente un pH de 9,5 à 12,5.

5. Procédé selon l'une quelconque des revendications 2 à 4, **caractérisé en ce que** les métaux lourds comprennent des métaux du groupe comprenant le cadmium, le mercure, l'antimoine, le plomb, le cobalt, le chrome, le cuivre, le manganèse, le vanadium, l'étain, le fer, le nickel et le zinc.

6. Procédé selon l'une quelconque des revendications 2 à 5, **caractérisé en ce qu'**on exécute une partie au moins du dépoussiérage à la première étape dans un cyclone ou un filtre électrostatique et une partie au moins du dépoussiérage à la troisième étape dans un filtre à tissu filtrant.

7. Procédé selon l'une quelconque des revendications 2 à 6, **caractérisé en ce que** l'épuration du milieu aqueux à la cinquième étape comprend une alcalinisation dudit milieu à une valeur de pH de 8 à 14, une filtration de laquelle on recueille, d'une part, un précipité comprenant une partie au moins des métaux lourds à l'état d'hydroxydes et, d'autre part, un filtrat, et un traitement du filtrat sur une résine chélatante.

8. Procédé selon l'une quelconque des revendications 2 à 7, **caractérisé en ce qu'**on soumet les cendres recueillies du lavage à un inertage dans lequel on additionne aux cendres un réactif sélectionné parmi l'acide phosphorique et les phosphates des métaux alcalins, on soumet le mélange phosphaté ainsi obtenu à un gâchage avec de l'eau et un liant hydraulique en sorte de former un mortier hydraulique et on soumet le mortier hydraulique à une prise et un durcissement.

9. Procédé selon la revendication 8, **caractérisé en ce que** le réactif sélectionné parmi l'acide phosphorique et les phosphates des métaux alcalins comprend de l'hexamétaphosphate de sodium et le liant hydraulique comprend du ciment Portland ou un clinker de ciment Portland.

10. Procédé selon la revendication 8 ou 9, **caractérisé en ce qu'**on exécute la prise et le durcissement du mortier hydraulique sous une atmosphère saturée de vapeur d'eau.

## Patentansprüche

1. Verfahren zur einerseits Reinigung eines aschebeladenen Abgases, das aus der Verbrennung von Abfällen stammt, die Schwermetalle, Natriumchlorid und chlorierte organische Reste enthalten, und anderseits zur Herstellung einer wäßrigen Lösung, wonach :
- in einer ersten Stufe das Abgas (3) einer Entstaubung (4) unterworfen wird, aus der getrennt einerseits ein entstaubtes Abgas (9) und anderseits Aschen (5) gewonnen werden;
- in einer zweiten Stufe das entstaubte Abgas (9) mit einem basischen Reaktionsmittel (11) behandelt wird und ein mit Stäuben beladenes Gas (12) gewonnen wird;
- in einer dritten Stufe das Gas (12) einem Entstauben (13) unterworfen wird, woraus einerseits ein entstaubtes Gas (14) und anderseits Stäube (16) gewonnen werden;
- in einer vierten Stufe die Stäube (16) in Wasser dispergiert werden (17) und ein wäßriges Milieu (19) gewonnen wird, das eine wäßrige Lösung eines von der basischen Verbindung abgeleiteten Salzes umfaßt; und
- in einer fünften Stufe das wäßrige Milieu (19) einer an sich bekannten Reinigung unterwirft, um einerseits die wäßrige Lösung (25) des von der basischen Verbindung abgeleiteten Salzes und anderseits einen festen Rückstand (24) zu gewinnen, der wenigstens einen Teil der Schwermetalle umfaßt;
**dadurch gekennzeichnet, daß** die Aschen (5) aus der ersten Stufe einem Waschen (6) mit Wasser unterzogen werden und daß wenigstens ein Teil des beim Waschen (6) wiedergewonnenen Wassers (8) zum Dispergieren der Stäube (16) in der vierten Stufe verwendet wird.

2. Verfahren nach Anspruch 1, **dadurch gekennzeichnet, daß** das basische Reaktionsmittel eine Natriumverbindung umfaßt und daß das abgeleitete Salz Natriumchlorid ist.

3. Verfahren nach Anspruch 2, **dadurch gekennzeichnet, daß** die Natriumverbindung Natrium(bi)carbonat umfaßt.

4. Verfahren nach den Ansprüchen 2 bis 3, **dadurch gekennzeichnet, daß** der pH-Wert des zum Waschen der Aschen verwendeten Wassers derart gewählt wird, daß das beim Waschen wiedergewonnene Wasser einen pH-Wert von 9,5 bis 12,5 aufweist.

5. Verfahren nach einem der Ansprüche 2 bis 4, **dadurch gekennzeichnet, daß** die Schwermetalle Metalle aus der Cadmium, Quecksilber, Antimon, Blei, Kobalt, Chrom, Kupfer, Mangan, Vanadium, Zinn, Eisen, Nickel und Zink umfassenden Gruppe umfassen.

6. Verfahren nach einem der Ansprüche 2 bis 5, **dadurch gekennzeichnet, daß** ein Teil des Entstaubens in der ersten Stufe in einem Zyklon oder einem elektrostatischen Filter ausgeführt wird und wenigstens ein Teil des Entstaubens in der dritten Stufe in einem Filter mit Filtergeweben vorgenommen wird.

7. Verfahren nach einem der Ansprüche 2 bis 6, **dadurch gekennzeichnet, daß** die Reinigung des wäßrigen Milieus in der fünften Stufe eine Alkalisierung des Milieus auf einen pH-Wert von 8 bis 14, eine Filtration, aus der einerseits ein Niederschlag gewonnen wird, der wenigstens einen Teil der Schwermetalle in Form von Hydroxiden umfaßt, und anderseits ein Filtrat gewonnen wird, und eine Behandlung des Filtrats auf einem chelatisierenden Harz umfaßt.

8. Verfahren nach einem der Ansprüche 2 bis 7, **dadurch gekennzeichnet, daß** die beim Waschen gewonnenen Aschen einem Inertisieren unterworfen werden, worin zu den Aschen ein unter Phosphorsäure und Alkalimetallphosphaten ausgewähltes Reaktionsmittel zugesetzt wird, das solcherart erhaltene phosphatierte Gemisch einem Anmachen mit Wasser und einem hydraulischen Bindemittel unterworfen wird, um einen hydraulischen Mörtel auszubilden, und der hydraulische Mörtel einem Abbinden und einem Erhärten ausgesetzt wird.

9. Verfahren nach Anspruch 8, **dadurch gekennzeichnet, daß** das unter Phosphorsäure und Alkalimetallphosphaten ausgewählte Reaktionsmittel Natriumhexametaphosphat umfaßt und daß das hydraulische Bindemittel Portlandzement oder einen Portlandzementklinker umfaßt.

10. Verfahren nach Anspruch 8 oder 9, **dadurch gekennzeichnet, daß** das Abbinden und das Erhärten des hydraulischen Mörtels unter einer wasserdampfgesättigten Atmosphäre vorgenommen werden.

## Claims

1. Process for, on the one hand, purifying fumes laden with ash, originating from the incineration of waste which contains heavy metals, sodium chloride and organochlorine residues, and, on the other hand, for manufacturing an aqueous sodium chloride solution, in which process :
- in a first step, the fumes (3) are subjected to a dust-removal operation (4), from which fumes freed of dust (9), on the one hand, and ash (5), on the other hand, are collected separately;
- in a second step, the fumes freed of dust (9) are treated with a basic reagent (11) and a gas laden with dust (12) is collected;
- in a third step, the gas (12) is subjected to a dust-removal operation (13), from which a gas freed of dust (14), on the one hand, and the dust (16), on the other hand, are collected;
- in a fourth step, the dust (16) is dispersed (17) in water and an aqueous medium (19) comprising an aqueous solution of the salt derived from the basic reagent is collected; and
- in a fifth step, the aqueous medium (19) is subjected to a purification which is known per se in order to collect, on the one hand, the aqueous solution of the salt derived from the basic reagent, and, on the other hand, a solid residue (24) comprising at least some of the heavy metals;
**characterized in that** the ash (5) from the first step is subjected to washing (6) with water and **in that** at least some of the water collected (8) from the washing (6) is used to disperse the dust (16) in the fourth step.

2. Process according to Claim 1, **characterized in that** the basic reagent comprises a sodium compound and the derived salt is sodium chloride.

3. Process according to Claim 2, **characterized in that** the sodium compound comprises sodium (bi)carbonate.

4. Process according to Claim 2 or 3, **characterized in that** the pH of the water used to wash the ash is chosen such that the water collected from the washing operation has a pH of 9.5 to 12.5.

5. Process according to any one of Claims 2 to 4, **characterized in that** the heavy metals comprise metals from the group comprising cadmium, mercury, antimony, lead, cobalt, chromium, copper, manganese, vanadium, tin, iron, nickel and zinc.

6. Process according to any one of Claims 2 to 5, **characterized in that** at least some of the dust removal in the first step is carried out in a cyclone or an electrostatic filter and at least some of the dust removal in the third step is carried out in a filter with a filter cloth.

7. Process according to any one of Claims 2 to 6, **characterized in that** the purification of the aqueous medium in the fifth step comprises a basification of the said medium to a pH value of 8 to 14, a filtration, from which is collected, on the one hand, a precipitate comprising at least some of the heavy metals in the form of hydroxides, and, on the other hand, a filtrate, and a treatment of the filtrate on a chelating resin.

8. Process according to any one of Claims 2 to 7, **characterized in that** the ash collected from the washing operation is subjected to an inertization process in which a reagent selected from phosphoric acid and alkali metal phosphates is added to the ash, the phosphatized mixture thus obtained is puddled with water and a hydraulic binder so as to form a hydraulic mortar, and the hydraulic mortar is set and hardened.

9. Process according to Claim 8, **characterized in that** the reagent selected from phosphoric acid and alkali metal phosphates comprises sodium hexametaphosphate and the hydraulic binder comprises Portland cement or Portland cement clinker.

10. Process according to Claim 8 or 9, **characterized in that** the setting and hardening of the hydraulic mortar are carried out under an atmosphere saturated with steam.
